# DEMANDE DE BREVET EUROPEEN

(11) **EP 2 139 218 A1**
(43) Date de publication de la demande: **30.12.2009**
(21) Numéro de dépôt: 09165105.9
(22) Date de dépôt: 07.06.1999
(51) Int. Cl.: H04M 15/00, G07F 7/08

(54) **Procédé et système pour gérer une décision d'achat effectuée par un acheteur au moyen d'un radiotéléphone mobile**

(30) Priorité: 15.06.1998 FR 9807666; 23.10.1998 FR 9813471
(62) Demande divisionnaire de: 99460039.3
(71) Demandeur: Societé Française du Radiotéléphone, 75008 Paris (FR)
(72) Inventeur: Capitant, Arnaud, 45650 St Jean-Le-Blanc (FR); Francois, Christophe, 92200 Neuilly-Sur-Seine (FR); Jean-Marie, Olivier, 78490 Bazoches (FR); Mercier, Philippe, 75013 Paris (FR); Frey, Sophie, 78100 St-Germain-En-Laye (FR); Hitti, Abdallah, 78100 St-Germain-En-Laye (FR); Lucas, Philippe, 91200 Palaiseau (FR); Wary, Jean-Pierre, 92340 Bourg-La-Reine (FR)
(74) Mandataire: Guéné, Patrick

(57) **Abrégé**

Il est proposé un procédé pour gérer, de manière sécurisée, une décision d'achat effectuée par un acheteur (2) au moyen d'un radiotéléphone mobile (1). La décision d'achat porte sur un bien et/ou un service acquis par 'acheteur auprès d'un fournisseur (7) disposant d'un serveur de vente à distance (8). Le radiotéléphone mobile permet l'accès à un réseau de radiocommunication fermé (5) géré par un centre de gestion (6) et dans lequel un abonné doit être identifié et authentifié. Un serveur de paiement (4) est raccordé au réseau de radiocommunication fermé. Le serveur de vente à distance est connecté au réseau de radiocommunication fermé via un réseau de télécommunication ouvert (9). Le procédé comprend : une première phase (étape d'identification de l'acheteur), au terme de laquelle le gestionnaire du serveur de paiement est assuré que l'acheteur fait licitement partie du réseau de radiocommunication auquel le serveur de paiement est raccordé ; une deuxième phase (étape d'authentification de l'acheteur), au terme de laquelle le gestionnaire du serveur de paiement est assuré que l'acheteur est habilité à payer les biens et/ou les services acquis. Le gestionnaire du serveur de paiement peut donc autoriser ou faire procéder aux compensations entre le compte de l'acheteur et celui du fournisseur.

## Description

La présente invention concerne un procédé pour payer à distance, au moyen d'un radiotéléphone mobile, l'acquisition d'un bien et/ou d'un service. L'invention concerne également un système et un radiotéléphone mobile permettant la mise en oeuvre d'un tel procédé.

Elle s'applique à tous types de radiotéléphones mobiles, c'est-à-dire aussi bien à ceux comprenant uniquement un terminal, qu'à ceux comprenant un terminal coopérant avec un module d'identification d'abonné.

Dans le standard GSM, le radiotéléphone mobile (aussi appelé "station mobile") est du second type, et le terminal et le module d'identification d'abonné qui le composent sont appelés respectivement "équipement mobile" et "carte SIM" (pour "Subscriber Identity Module" en anglais). On rappelle qu'une carte SIM se présente sous la forme d'une carte à microprocesseur que l'on glisse dans le radiotéléphone mobile. Elle contient toutes les informations individuelles propres à l'abonné, et en particulier le numéro international d'abonné (ou IMSI, pour "International Mobile Subscriber Identity" en anglais) de ce dernier, ainsi qu'une clé d'authentification individuelle (appelée Ki) et un algorithme d'authentification individuelle (appelé A3/A8).

Divers procédés et systèmes de paiement électronique ont déjà été proposés.

Le brevet EP 451 057 B1, publié le 9 octobre 1991, décrit un procédé et un système mettant en oeuvre un serveur de paiement. La solution préconisée dans ce brevet implique l'utilisation d'une carte émettant un signal vocal d'identification. Ce signal est reçu par le microphone du téléphone puis transmis au serveur de paiement.

La demande de brevet WO 96/32701, publiée le 17 octobre 1996, décrit également un procédé de paiement électronique mettant en oeuvre un serveur de paiement. Il permet d'effectuer des transactions liées à l'achat de biens offerts par des marchands au moyen de services télématiques via un réseau de télécommunication informatique ouvert, par exemple le réseau "Internet", sur lequel sont connectés des postes serveurs de marchands et des postes clients ainsi qu'un poste serveur de paiement.

Dans le cadre de la présente invention, on suppose que le paiement de biens ou de services à distance, au moyen d'un radiotéléphone mobile, est effectué via un réseau de radiocommunication de type fermé. Par réseau de radiocommunication fermé, on entend notamment, mais non exclusivement, les réseaux basés sur la technologie GSM (par exemple le GSM 900, le DCS 1800, ...).

On rappelle qu'un réseau de radiocommunication fermé peut bien sûr être relié à un (ou plusieurs) réseau(x) ouvert(s), par l'intermédiaire de plateformes ou passerelles. Ainsi, un usager du réseau de radiocommunication fermé peut, avec son radiotéléphone mobile, accéder à un réseau ouvert. Par exemple, l'accès au réseau ouvert "Internet" est possible avec un radiotéléphone mobile, à partir d'un réseau GSM, si le radiotéléphone mobile possède des moyens (tels qu'un navigateur, ou "browser") de mise en oeuvre d'un protocole basé sur un langage spécifique, tel que le langage HDML (pour "Handset Device Markup Language" en anglais, ou "langage hypertexte pour terminaux portables") ou WML (pour "Wireless Markup Language" en anglais, ou "langage hypertexte pour terminaux sans fil"), ou encore tout autre langage du même type et/ou dérivé de l'un des deux langages précités.

Or, du fait qu'un réseau de radiocommunication fermé n'appartient pas à la catégorie des réseaux de télécommunication informatiques ouverts, la solution préconisée par la demande WO 96/32701 ne peut s'appliquer au problème posé par l'invention (à savoir le paiement de biens ou de services à distance, au moyen d'un radiotéléphone mobile).

La présente invention a précisément pour but de fournir un procédé permettant de payer à distance, de manière sécurisée, au moyen d'un radiotéléphone mobile, un bien et/ou un service acquis par un acheteur auprès d'un fournisseur.

L'invention a également pour objectif de fournir un tel procédé de paiement qui minimise les interventions de l'acheteur, tout en offrant une sécurité optimale.

Ces différents objectifs, ainsi que d'autres qui apparaîtront par la suite, sont atteints selon l'invention à l'aide d'un procédé selon la revendication 1.

Ainsi, au terme de la première phase (étape d'identification de l'acheteur), le gestionnaire du serveur de paiement est assuré que l'acheteur fait licitement partie du réseau de radiocommunication auquel le serveur de paiement est raccordé.

Il est à noter que, l'identification de l'acheteur étant effectuée par le centre de gestion du réseau de radiocommunication, l'opérateur de radiocommunication (qui assure le fonctionnement de ce centre de gestion) devient, dans le cadre de la présente invention, un "semi-tiers de confiance" vis-à-vis de l'organisme bancaire (qui assure le fonctionnement du serveur de paiement). En effet, dans ce cas, l'organisme bancaire se contente d'authentifier l'acheteur, l'identification du titulaire du radiotéléphone mobile étant confiée à l'opérateur.

Ainsi, au cours de la première phase (étape d'identification de l'acheteur), on tire avantageusement profit du fait que, dans un réseau de radiocommunication fermé (par exemple de type GSM), l'abonné doit être identifié et authentifié par l'opérateur en charge de la tarification pour éviter la fraude et veiller à ce que la facturation soit correcte. De façon astucieuse, on utilise donc la sécurisation sur des couches physiques qu'offre un réseau fermé, par exemple du type GSM. On rappelle que dans un réseau ouvert, tel que par exemple Internet, la sécurisation est au contraire réalisée au niveau applicatif.

Ainsi, on utilise lors de la première phase (étape d'identification de l'acheteur) la procédure d'authentification d'abonné prévue dans la norme GSM. Il est important de noter que procédure d'authentification d'abonné ne doit en aucun cas être confondue avec la procédure d'authentification de l'acheteur.

Ainsi, au terme de la deuxième phase (étape d'authentification de l'acheteur), le gestionnaire du serveur de paiement est assuré que l'acheteur est habilité à payer les biens et/ou les services acquis. Le gestionnaire du serveur de paiement peut donc autoriser ou faire procéder aux compensations entre le compte de l'acheteur et celui du fournisseur.

L'invention concerne aussi un système selon la revendication 7. Ce système comprend des moyens permettant la mise en oeuvre du procédé précité.

D'autres caractéristiques et avantages de l'invention apparaîtront à la lecture de la description suivante de différentes variantes de réalisation de l'invention, données à titre d'exemple indicatif et non limitatif, et des dessins annexés, dans lesquels :
- la figure 1 présente une vue d'ensemble schématique d'un mode de réalisation particulier d'un système selon l'invention ;
- la figure 2 présente une vue, sous la forme de bloc diagramme, d'un mode de réalisation particulier d'un radiotéléphone mobile selon l'invention ;
- la figure 3 présente une vue, sous la forme de bloc diagramme, d'un mode de réalisation particulier d'un centre de gestion selon l'invention ;
- la figure 4 présente une vue, sous la forme de bloc diagramme, d'un mode de réalisation particulier d'un serveur de paiement selon l'invention ;
- la figure 5 présente, sous forme d'organigramme, les phases des opérations relatives à l'acquisition d'un bien et/ou d'un service ;
- la figure 6 présente un organigramme simplifié d'un mode de réalisation particulier du procédé selon l'invention ; et
- la figure 7 présente une vue, sous la forme de bloc diagramme, d'un mode de réalisation particulier d'un portefeuille électronique selon l'invention.

L'invention concerne donc un procédé, ainsi qu'un système et un radiotéléphone mobile correspondants, permettant à un acheteur de payer à distance, au moyen d'un radiotéléphone mobile, l'acquisition d'un bien et/ou d'un service.

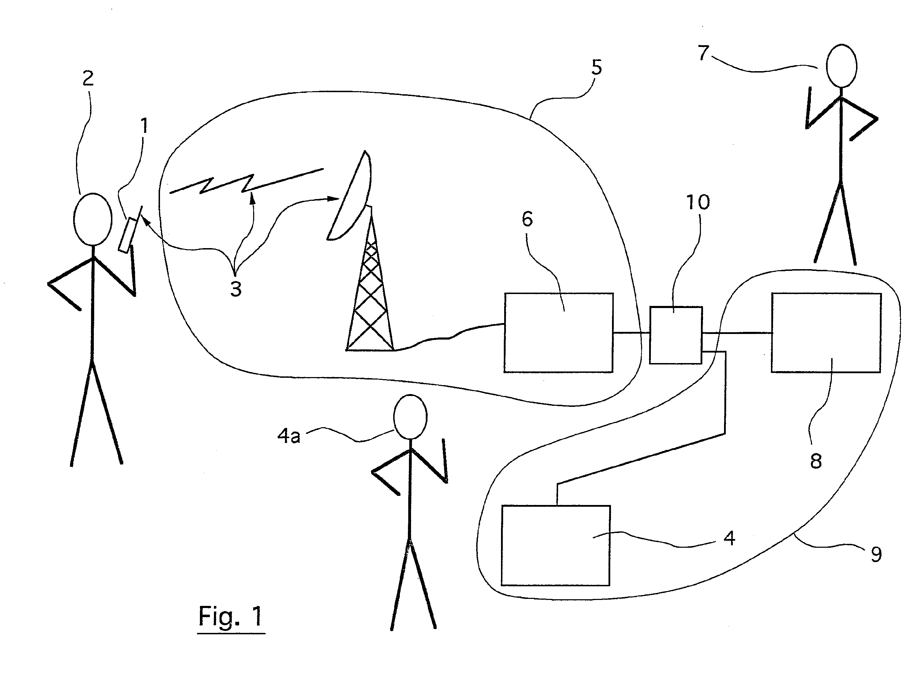

Dans le mode de réalisation particulier présenté sur la **figure 1****,** le système comprend un radiotéléphone mobile 1 permettant l'accès, via une liaison hertzienne 3, à un réseau de radiocommunication 5 (par exemple un réseau GSM) géré par un centre de gestion 6. Un serveur de paiement 4 et un serveur de vente 8 sont par ailleurs raccordés au réseau de radiocommunication 5.

Dans l'exemple présenté, le serveur de paiement 4 et le serveur de vente 8 sont connectés à un réseau de télécommunication informatique ouvert, par exemple le réseau Internet 9. Le réseau de radiocommunication 5 est interconnecté à ce réseau Internet 9, via une passerelle 10 (par exemple une "plateforme d'accès UP", commercialisée par la société Unwired Planet). Le radiotéléphone mobile est dans ce cas muni d'un navigateur (par exemple un navigateur "UP.browser" (marque déposée), commercialisé par la société Unwired Planet) lui permettant, via la passerelle, de naviguer au sein du réseau Internet, et d'accéder notamment au serveur de paiement 4 et au serveur de vente 8.

Le système permet à un acheteur 2 muni du radiotéléphone mobile 1, et qui est donc supposé ici être également un abonné inscrit auprès de l'opérateur du réseau de radiocommunication 5, de payer à distance de manière sécurisée, un bien et/ou un service qu'il a acquis auprès d'un fournisseur 7 disposant du serveur de vente à distance 8.

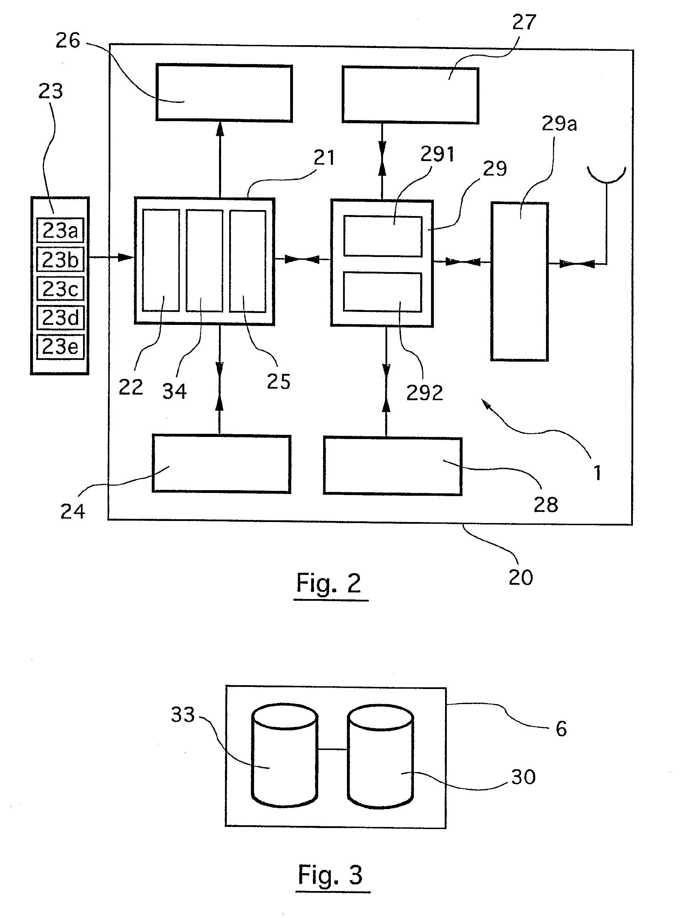

Dans le mode de réalisation particulier présenté sur la **figure 2****,** le radiotéléphone mobile 1 comprend un terminal 20 coopérant avec une carte SIM 23. Il est clair cependant que la présente invention s'applique également à un radiotéléphone constitué du seul terminal (c'est-à-dire ne comprenant pas de module d'identification d'abonné).

De manière connue en soi, le terminal 20 comprend par exemple un module de gestion de communication 21 et un module de traitement de l'information 29, autour desquels sont interconnectés un clavier 24, un écran afficheur 26, un haut parleur 27, un microphone 28 et des moyens d'émission/réception radio 29a (comprenant une antenne).

Il est clair que l'invention s'applique plus généralement à tout type de radiotéléphone mobile. Ainsi, le terminal "classique" tel que décrit ci-dessus peut être remplacé par n'importe quel type de module de radiocommunication pouvant se connecter à un réseau de radiocommunication, tel que par exemple un terminal ne comprenant ni clavier ni écran, ou encore un microordinateur coopérant avec un terminal par l'intermédiaire d'une carte de type PCMCIA ("Personal Computer Memory Card International Association") ou équivalent.

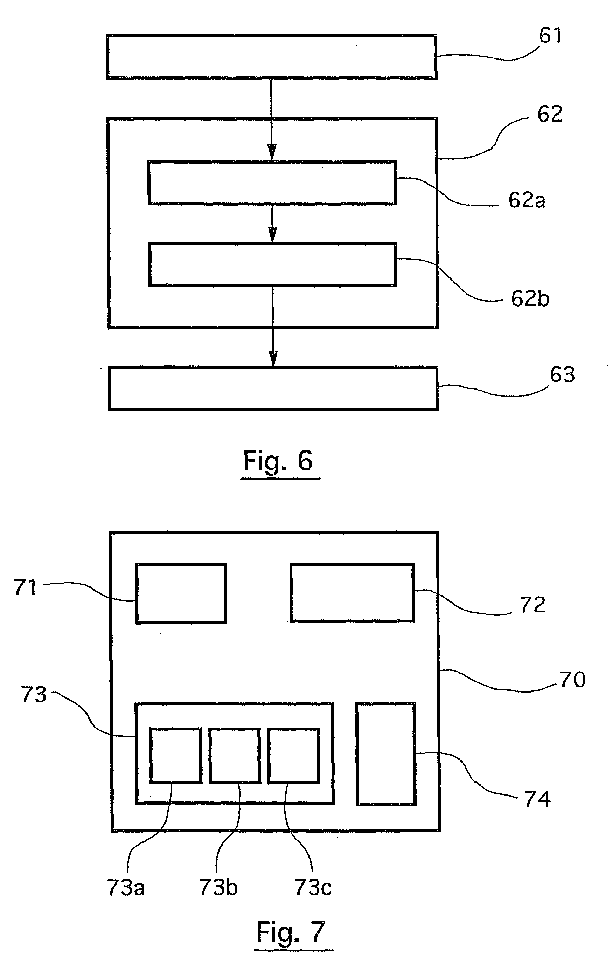

Comme présenté sur l'organigramme de la **figure 6****,** le procédé selon l'invention comprend les étapes suivantes :
- (optionnellement) déverrouillage (61) (ou "initialisation") du radiotéléphone mobile 1 ;
- identification (62) de l'acheteur, en tant qu'utilisateur du réseau de radiocommunication, par le centre de gestion 6 et/ou par le serveur de paiement 4 et/ou par un centre de contrôle indépendant (non représenté) ;
- authentification (63) de l'acheteur, et éventuellement d'une décision d'achat d'un bien et/ou d'un service acquis par l'acheteur, par le centre de gestion 6 et/ou le serveur de paiement 4 et/ou par le centre de contrôle (non représenté).

L'étape (optionnelle) 61 de déverrouillage du radiotéléphone 1, connue en soi, se déroule par exemple de la façon suivante : l'acheteur 2 saisit au clavier 4 un numéro d'identité personnel (ou code PIN selon la terminologie GSM), puis le radiotéléphone 1 compare le numéro d'identité personnel saisi par l'acheteur avec celui stocké dans des zones protégées du radiotéléphone mobile 1 (typiquement, dans la carte SIM 23). Le radiotéléphone 1 est "déverrouillé" (c'est-à-dire opérationnel dans le réseau de radiocommunication) uniquement en cas de comparaison positive.

L'étape 62 d'identification de l'acheteur 2 consiste, selon la présente invention, à identifier et authentifier l'abonné qu'est l'acheteur lorsqu'il utilise le radiotéléphone. Cette étape 62 comprend donc par exemple les étapes classiques suivantes :
- identification d'abonné (62a), permettant au centre de gestion 6 de se voir communiquer un identifiant d'abonné propre à l'acheteur, en tant qu'utilisateur du réseau de radiocommunication. L'identifiant d'abonné 23a, ou IMSI selon la terminologie GSM, est typiquement stocké dans la carte SIM 23 ;
- authentification d'abonné (62b), permettant au centre de gestion de contrôler l'identifiant d'abonné qui lui a été communiqué lors de l'étape 62a d'identification d'abonné.

Il est à noter que l'étape d'identification de l'acheteur (consistant en une identification et une authentification d'abonné) est effectuée de façon automatique, c'est-à-dire ne nécessite aucune intervention de l'acheteur. Ce dernier n'est sollicité que lors de la phase suivante d'authentification de l'acheteur, lorsqu'il doit saisir son code de paiement confidentiel.

Il est également important de noter que l'étape 62b d'authentification de l'abonné ne doit en aucun cas être confondue avec l'étape 63 d'authentification de l'acheteur présentée en détail par la suite. En effet, l'authentification de l'abonné (qu'est l'acheteur) intervient uniquement dans le cadre de l'identification de l'acheteur. On comprend que cette identification de l'acheteur doit ensuite être complétée par une authentification de l'acheteur, de façon que le serveur de paiement vérifie que l'acheteur identifié est bien habilité à effectuer des achats.

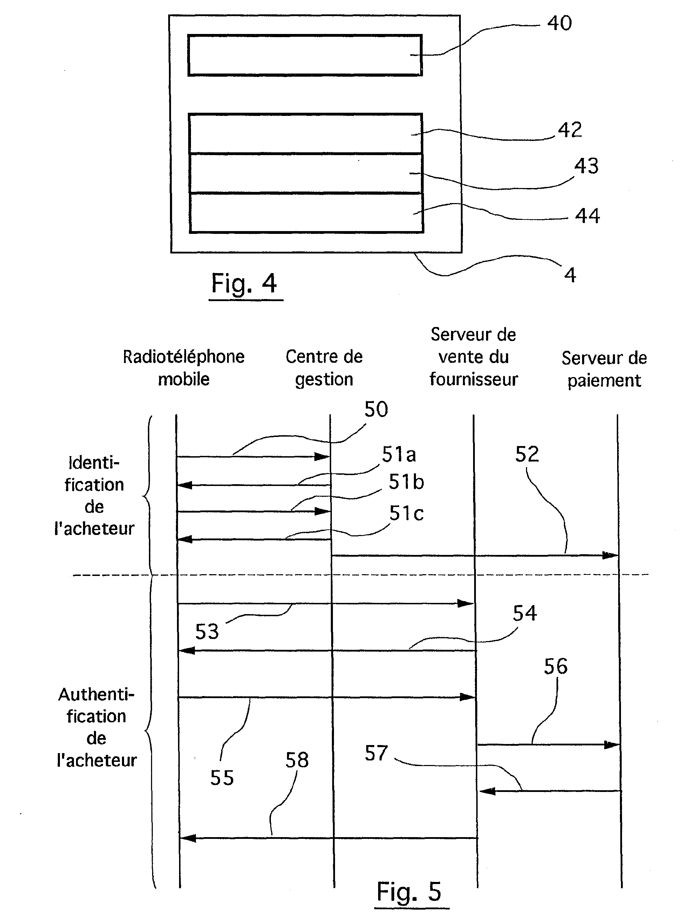

A titre d'exemple uniquement, on rappelle maintenant, en relation avec la **figure 5****,** le déroulement "classique", en GSM, de ces étapes d'identification 62a et d'authentification 62b d'abonné. Le radiotéléphone 1 envoie l'identifiant d'abonné (IMSI) 50 de l'utilisateur au centre de gestion 6. Après que l'abonné se soit ainsi identifié (62a), le centre de gestion 6 doit contrôler son identité, c'est-à-dire l'authentifier (62b). Pour cela, le centre de gestion 6 fournit un nombre aléatoire ("RAND") 51a au radiotéléphone 1. A partir de ce nombre aléatoire, et avec un algorithme ("A3/A8") 23b et une clé ("Ki") 23c d'authentification individuelle contenus dans des zones protégées du radiotéléphone mobile (typiquement la carte SIM 23), le radiotéléphone 1 calcule une signature électronique d'abonné ("SRES"). Cette signature électronique d'abonné 51 b est transmise au centre de gestion 6 (et plus précisément à un module de gestion des abonnés 30 (**figure 3**)), qui la contrôle par comparaison avec celle qu'il a calculé localement. Si les deux signatures électroniques d'abonné sont identiques, l'authentification de l'abonné (et dans le cadre de l'invention, l'identification de l'acheteur) est réussie (le titulaire du radiotéléphone mobile 1 fait partie de la liste des abonnés) et le centre de gestion renvoie des messages 51c et 52 en ce sens vers le radiotéléphone 1 et vers un module identification 40 compris dans le serveur de paiement 4 (**figure 4**). De plus, la technologie GSM permet une authentification indépendante de la communication établie en fonction de la topologie du réseau (à l'établissement, lors d'un handover, etc).

En résumé, après exécution de l'étape 62 d'identification de l'acheteur, le gestionnaire 4a du serveur de paiement 4 est assuré que le titulaire 2 du radiotéléphone mobile 1 (c'est-à-dire l'acheteur dans le cas présent) est régulièrement inscrit sur la liste des abonnés et qu'il fait donc licitement partie du réseau de radiocommunication auquel le serveur de paiement 4 est raccordé.

L'étape 62 d'identification de l'acheteur est éventuellement suivie d'une étape 63 d'authentification de l'acheteur. Il s'agit pour le gestionnaire 4a du serveur de paiement 4 de s'assurer que l'acheteur 2 disposant du radiotéléphone mobile 1 au moment du règlement est habilité à payer les biens et/ou les services acquis. Si c'est effectivement le cas, le gestionnaire du serveur de paiement peut alors autoriser ou faire procéder aux compensations entre le compte de l'acheteur 2 et celui du fournisseur 7. Cette étape 63 d'authentification de l'acheteur peut être mise en oeuvre avant ou après que l'acheteur ait pris la décision d'achat.

Dans un mode de réalisation particulier, cette étape 63 d'authentification de l'acheteur comprend les étapes suivantes :
- introduction dans le radiotéléphone mobile 1, par l'acheteur 2, au moyen du clavier 24, d'un code de paiement confidentiel. Cette étape d'introduction est par exemple effectuée à l'aide d'un algorithme de saisie stocké dans le radiotéléphone mobile (dans la carte SIM 23 ou dans le terminal 20) ou, selon une variante, à l'aide d'une ou plusieurs pages téléchargées, au format HDML ou équivalent, et prévues à cet effet ;
- génération d'une signature électronique d'acheteur par le radiotéléphone mobile :
   * avec un algorithme 23d et une clé 23e de sécurisation de paiement contenus dans des zones 23 protégées du radiotéléphone mobile (soit dans le terminal 20, soit dans la carte SIM 23) ;
   * à partir de données relatives à la transaction (telles que le contenu et/ou le prix) et/ou de données relatives à l'acheteur (telles que le code de paiement confidentiel, si celui-ci a été saisi par l'acheteur). En outre, les données relatives à la transaction peuvent inclure des éléments fournissant une variabilité sur la signature (tels que par exemple la date horaire de la transaction, un nombre aléatoire, un numéro de série de la transaction, etc);
- transmission de la signature électronique d'acheteur au serveur de paiement 4, par le radiotéléphone mobile 1 ;
- contrôle, dans un module de contrôle 42 compris dans le serveur de paiement 4 (figure 4), de la signature électronique d'acheteur. La signature électronique d'acheteur est tenue à la disposition de l'acheteur 2 et du fournisseur 7. Ce contrôle peut également être effectué par le centre de gestion des abonnés 6 ou par le centre de contrôle (non représenté). Dans le premier cas, le centre de gestion des abonnés 6 comprend un module d'authentification 33 (figure 3) des titulaires de radiotéléphone abonnés au service de paiement à distance.

Le déroulement de ce mode de réalisation particulier (donné à titre d'exemple) de l'étape d'authentification de l'acheteur est maintenant résumé, en relation avec la partie inférieure de la **figure 5****.** L'acheteur 2 adresse une demande d'achat 53 au serveur de vente 8 du fournisseur 7. Il reçoit en retour les données relatives au prix du bien et/ou du service 54. L'acheteur prend ensuite une décision d'achat 55. Dans le même temps, les moyens de calcul (typiquement un microprocesseur) du radiotéléphone mobile calculent une signature électronique d'acheteur. Le radiotéléphone mobile 1 transmet, à l'aide des moyens 29a de transmission, la décision d'achat et la signature électronique d'acheteur d'une part (flèche référencée 55) au serveur 8 du fournisseur 7 et d'autre part (flèche référencée 56) au serveur de paiement 4. Le serveur de paiement 4 comprend un module de contrôle (ou de certification) 42 pour contrôler (pour certifier) la signature électronique d'acheteur. Ce module de contrôle 42 (figure 4) contrôle la signature en procédant par exemple à des calculs d'opérations identiques à celles effectuées dans le radiotéléphone mobile au moment de l'achat. Si la transaction est acceptée par le serveur de paiement 4, un message 57 "transaction acceptée" est adressé au serveur 8 du fournisseur, par un module accusé de réception 43 du serveur de paiement 4 (figure 4). Le serveur 8 du fournisseur adresse un message 58 de "confirmation d'achat" à l'acheteur (au radiotéléphone mobile de l'acheteur et/ou au domicile de l'acheteur). Les signatures électroniques d'acheteur sont stockées par un module de stockage 44 du serveur de paiement 4 (figure 4) et sont tenues à la disposition de l'acheteur et du fournisseur.

Il est clair que si contrôle (ou la certification) de la signature électronique d'acheteur est effectué par le centre de gestion des abonnés 6 ou par le centre de contrôle (non représenté), alors celui-ci (ceux-ci) comprend(nent) des modules de contrôle, d'accusé de réception et de stockage du type de ceux 42, 43 et 44 décrits ci-dessus pour le serveur de paiement 4.

Selon une variante plus simple à mettre en oeuvre, l'étape 63 d'authentification de l'acheteur, et éventuellement de la décision d'achat, comprend elle-même les étapes suivantes :
- introduction dans le radiotéléphone mobile 1, par l'acheteur, au moyen d'un clavier 24 associé au radiotéléphone mobile, d'un code de paiement confidentiel. Cette étape d'introduction est par exemple effectuée à l'aide d'un algorithme de saisie stocké dans le radiotéléphone mobile (dans la carte SIM 23 ou dans le terminal 20) ou, selon une variante, à l'aide d'une ou plusieurs pages téléchargées, au format HDML ou équivalent, et prévues à cet effet ;
- transmission de façon sécurisée du code de paiement confidentiel au serveur de paiement 4, par le radiotéléphone mobile ;
- contrôle du code de paiement confidentiel par le serveur de paiement 4 (consistant par exemple à vérifier que ce code de paiement confidentiel appartient effectivement à une liste prédéterminée de codes de paiement valides).

Quel que soit le mode de réalisation choisi, à l'issue de l'étape 63 d'authentification de l'acheteur, le gestionnaire 4a du serveur de paiement 4 est assuré que l'acheteur 2 disposant du radiotéléphone mobile 1 au moment du règlement est habilité à payer les biens et/ou les services acquis. La signature électronique d'acheteur permet d'arbitrer les éventuelles contestations entre l'acheteur 2 et/ou le fournisseur 7 et/ou le gestionnaire 4a du serveur de paiement 4.

Selon la présente invention, le radiotéléphone 1 comprend, par exemple dans le module de gestion de communication 21, divers moyens nécessaires à la mise en oeuvre des différentes étapes du procédé tel que décrits ci-dessus (à travers plusieurs modes de réalisation et variantes). Notamment, le radiotéléphone comprend des moyens 22 nécessaires au déverrouillage du radiotéléphone, des moyens 24 nécessaires à l'identification de l'acheteur et des moyens 25 nécessaires à l'authentification de l'acheteur.

Les moyens de gestion de la communication et/ou les moyens de traitement de l'information 29 du radiotéléphone mobile 1 peuvent également comporter des moyens 291, permettant de crypter, de manière connue en soi, les données relatives au règlement de l'acquisition des biens et/ou des services, échangées entre le radiotéléphone mobile 1 et/ou le centre de gestion 6 et/ou le serveur de paiement 4 et/ou le centre de contrôle. Grâce à ces moyens de cryptage, la confidentialité de l'acquisition est assurée.

Les moyens de traitement de l'information 29 du radiotéléphone mobile 1 peuvent également comporter des moyens 292 permettant, de manière connue en soi, le contrôle de l'intégrité des données relatives au règlement de l'acquisition des biens et/ou des services, échangées entre le radiotéléphone mobile 1 et/ou le centre de gestion 6 et/ou le serveur de paiement 4 et/ou le centre de contrôle. Ainsi, un fraudeur n'a pas la possibilité de modifier ces données.

## Revendications

1. Procédé pour gérer, de manière sécurisée, une décision d'achat effectuée par un acheteur (2) au moyen d'un radiotéléphone mobile (1), ladite décision d'achat portant sur un bien et/ou un service acquis par ledit acheteur auprès d'un fournisseur (7) disposant d'un serveur de vente à distance (8), ledit radiotéléphone mobile permettant l'accès à un réseau de radiocommunication fermé (5) géré par un centre de gestion (6) et dans lequel un abonné doit être identifié et authentifié, un serveur de paiement (4) étant raccordé audit réseau de radiocommunication fermé (5), ledit serveur de vente à distance (8) étant connecté audit réseau de radiocommunication fermé (5) via un réseau de télécommunication ouvert (9), ledit procédé comprenant :
- une étape d'identification d'abonné (62a), dans laquelle le centre de gestion (6) reçoit un identifiant d'abonné (IMSI ; 23a ; 50) propre audit acheteur, en tant qu'utilisateur du réseau de radiocommunication fermé ;
- une étape d'authentification d'abonné (62b), dans laquelle le centre de gestion (6) contrôle l'identifiant d'abonné qui lui a été communiqué lors de l'étape (62a) d'identification d'abonné ;
**caractérisé en ce que** ledit procédé comprend une première phase, effectuée de façon automatique par le centre de gestion (6), sans intervention de l'acheteur et indépendamment de ladite décision d'achat effectuée par ledit acheteur, ladite première phase comprenant lesdites étapes d'identification et authentification d'abonné ainsi que l'étape suivante :
- en cas d'authentification d'abonné réussie, une étape de transmission au serveur de paiement (4), par le centre de gestion (6), d'un message d'authentification d'abonné réussie (52), indiquant que ledit acheteur est un abonné régulièrement inscrit sur une liste des abonnés audit réseau de radiocommunication fermé (5) ; et **en ce que** ledit procédé comprend une deuxième phase, distincte de la première phase et comprenant les étapes suivantes :
- une étape d'introduction par ledit acheteur, au moyen d'un clavier (24) associé au radiotéléphone mobile (1), de son code de paiement confidentiel dans le radiotéléphone mobile (1), ledit code de paiement confidentiel étant un code d'authentification dudit acheteur par le serveur de paiement (4) ;
- une étape de transmission, de façon sécurisée, du code d'authentification dudit acheteur au serveur de paiement ;
- une étape de contrôle, par le serveur de paiement (4), que ledit code d'authentification dudit acheteur est correct ;
- une étape d'acceptation de ladite décision d'achat, par le serveur de paiement (4) :
* si le serveur de paiement (4) a reçu ledit message d'authentification d'abonné réussie (52), c'est-à-dire si ledit acheteur est un abonné régulièrement inscrit sur une liste des abonnés audit réseau de radiocommunication fermé, et
* si ledit code d'authentification dudit acheteur est correct, c'est-à-dire si ledit acheteur a été authentifié par le serveur de paiement (4) ;
- une étape de transmission au serveur de vente à distance (8), par le serveur de paiement (4), d'un message (57) d'acceptation de la décision d'achat effectuée par ledit acheteur.

2. Procédé selon la revendication 1, **caractérisé en ce qu'**il comprend une étape de génération d'une signature électronique d'acheteur par le radiotéléphone mobile, au moins en fonction dudit code d'authentification dudit acheteur,
**en ce que** ladite étape de transmission du code d'authentification dudit acheteur comprend une étape de transmission (29a) de la signature électronique d'acheteur au serveur de paiement, par le radiotéléphone mobile,
et **en ce que** ladite étape de contrôle que le code d'authentification dudit acheteur est correct comprend une étape de contrôle (42) de la signature électronique d'acheteur par le serveur de paiement (4), la signature électronique d'acheteur étant tenue (43, 44) à la disposition de l'acheteur et du fournisseur.

3. Procédé selon l'une quelconque des revendications 1 et 2, **caractérisé en ce que** ladite étape d'introduction dudit code d'authentification dudit acheteur est effectuée à l'aide d'au moins une page téléchargée, au format HDML ou équivalent, et prévue à cet effet.

4. Procédé selon la revendication 2 ou 3, **caractérisé en ce que** ladite étape de génération d'une signature électronique d'acheteur est effectuée :
- avec un algorithme de sécurisation de paiement (23d) et/ou une clé de sécurisation de paiement (23e) contenus dans des zones (23) protégées du radiotéléphone mobile (1), et
- à partir de données relatives à la décision d'achat et/ou de données relatives à l'acheteur.

5. Procédé selon la revendication 4, ledit radiotéléphone mobile (1) comprenant un terminal (20) coopérant avec un module d'identification d'abonné (23), **caractérisé en ce que** ledit algorithme de sécurisation de paiement et/ou ladite clé de sécurisation de paiement est (sont) stocké(s) dans des zones protégées dudit terminal.

6. Procédé selon la revendication 4, ledit radiotéléphone mobile (1) comprenant un terminal (20) coopérant avec un module d'identification d'abonné (23), **caractérisé en ce que** ledit algorithme de sécurisation de paiement (23d) et/ou ladite clé de sécurisation de paiement (23e) est (sont) stocké(s) dans des zones protégées dudit module d'identification d'abonné.

7. Système de gestion, de manière sécurisée, d'une décision d'achat effectuée par un acheteur (2) au moyen d'un radiotéléphone mobile (1), ladite décision d'achat portant sur un bien et/ou un service acquis par ledit acheteur auprès d'un fournisseur (7) disposant d'un serveur de vente à distance (8), ledit radiotéléphone mobile permettant l'accès à un réseau de radiocommunication fermé (5) géré par un centre de gestion (6) et dans lequel un abonné doit être identifié et authentifié, un serveur de paiement (4) étant raccordé audit réseau de radiocommunication fermé, ledit serveur de vente à distance (8) étant connecté audit réseau de radiocommunication fermé (5) via un réseau de télécommunication ouvert (9), ledit système de gestion comprenant ledit au moins un radiotéléphone mobile (1), ledit serveur de vente à distance (8), ledit réseau de radiocommunication fermé (5), ledit centre de gestion (6), ledit serveur de paiement (4) et ledit réseau de télécommunication ouvert (9), ledit système comprenant :
- des moyens d'identification d'abonné, compris dans le centre de gestion (6), et permettant de recevoir un identifiant d'abonné (IMSI ; 23a ; 50) propre audit acheteur, en tant qu'utilisateur du réseau de radiocommunication fermé ;
- des moyens d'authentification d'abonné, compris dans le centre de gestion (6), et permettant de contrôler l'identifiant d'abonné reçu par les moyens d'identification d'abonné ; ledit système étant **caractérisé en ce qu'**il comprend :
- des moyens de transmission, activés en cas d'authentification d'abonné réussie et compris dans le centre de gestion (6), permettant de transmettre au serveur de paiement (4) un message d'authentification d'abonné réussie (52), indiquant que ledit acheteur est un abonné régulièrement inscrit sur une liste des abonnés audit réseau de radiocommunication fermé (5) ;
- un clavier (24) associé au radiotéléphone mobile (1) et compris dans ledit système, permettant audit acheteur d'introduire un code de paiement confidentiel dans le radiotéléphone mobile (1), ledit code de paiement confidentiel étant un code d'authentification dudit acheteur par le serveur de paiement (4) ;
- des moyens de transmission, compris dans ledit système, du code d'authentification dudit acheteur au serveur de paiement ;
- des moyens de contrôle, compris dans le serveur de paiement (4), et permettant de contrôler que ledit code d'authentification dudit acheteur est correct ;
- des moyens d'acceptation, compris dans le serveur de paiement (4), et permettant d'accepter ladite décision d'achat :
* si le serveur de paiement (4) a reçu ledit message d'authentification d'abonné réussie (52), c'est-à-dire si ledit acheteur est un abonné régulièrement inscrit sur une liste des abonnés audit réseau de radiocommunication fermé, et
* si ledit code d'authentification dudit acheteur est correct, c'est-à-dire si ledit acheteur a été authentifié par le serveur de paiement (4) ;
- des moyens de transmission, compris dans ledit système, d'un message (57) d'acceptation de la décision d'achat effectuée par ledit acheteur, depuis le serveur de paiement (4) vers le serveur de vente à distance (8).
